# EUROPEAN PATENT APPLICATION

(11) **EP 2 560 096 A1**
(43) Date of publication of application: **20.02.2013**
(21) Application number: 12172181.5
(22) Date of filing: 15.06.2012
(51) Int. Cl.: G06F 9/455, G06F 9/48

(54) **Information processing apparatus and interrupt control method**

(30) Priority: 15.08.2011 JP 2011177667
(71) Applicant: FUJITSU LIMITED, Kawasaki-shi, Kanagawa 211-8588 (JP)
(72) Inventor: Suzuki, Kazuhiro, Kanagawa, 211-8588 (JP)
(74) Representative: HOFFMANN EITLE

(57) **Abstract**

An information processing apparatus includes an interrupt control unit and a virtualization control unit. The interrupt control unit specifies a virtual machine serving as a destination of an interrupt request. The virtualization control unit operates multiple virtual machines. The virtualization control unit includes a specifying unit and an execution control unit. The specifying unit specifies a storage destination of an interrupt program corresponding to the virtual machine specified by the interrupt control unit based on information stored in a storage unit which stores information on a storage destination of an interrupt program in association with each of the multiple virtual machines. The execution control unit reads and executes the interrupt program stored in the storage destination specified by the specifying unit.

## Description

### FIELD

The embodiments discussed herein are related to an information processing apparatus and an interrupt control method.

### BACKGROUND

Server virtualization techniques have been known. According to this technique, a virtual server called a VM (virtual machine) operates on a physical server such as an information processing apparatus. In the physical server, a hypervisor called a VMM (virtual machine monitor) operates. The hypervisor performs various types of control relevant to VM such as generation of VM.

When an external interrupt request to VM occurs in a physical server employing the server virtualization techniques, an interrupt controller notifies a hypervisor of the external interrupt request. The hypervisor converts the external interrupt request into a virtual interrupt request and notifies a VM serving as a destination of an interrupt of the virtual interrupt request. The VM notified of the virtual interrupt request executes an interrupt process and then notifies the hypervisor of the completion of execution. Subsequently, the hypervisor notifies the interrupt controller of completion of the interrupt, and the interrupt process is finished.

Moreover, as a technique of executing an interrupt to a VM, there is known a technique in which when a VM operates, the entry of an interrupt vector table of a hypervisor is rewritten into an interrupt processing program of the VM (see, for example, Japanese Laid-open Patent Publication No. 61-206043). Moreover, there is known a technique in which when the purpose of activation of the VM is an interrupt, information appropriate for the content of an interrupt is stored in a stack, and control is transferred to an interrupt handler in the VM executing an appropriate process on the stored information (see, for example, Japanese Laid-open Patent Publication No. 61-184643). Furthermore, there is known a technique in which when an execution right is allocated to a VM which is a performance monitoring target, a link to an interrupt handler of the VM is registered in an interrupt table of a hypervisor. Moreover, when an interrupt occurs, the interrupt handler is activated in accordance with the interrupt table (see, for example, Japanese Laid-open Patent Publication No. 2010-152458).

However, in the related art, when an interrupt request to a VM to which a CPU (central processing unit) is not allocated occurs, it is not possible to process the interrupt request until the CPU is allocated to the VM. Thus, there is a problem in that an interrupt process is not performed efficiently.

For example, when multiple VMs are operating in a physical server, one of the operating VMs to which the CPU is allocated can execute a process in accordance with a scheduler or the like. That is, a VM having the execution right of the CPU executes various processes. Thus, when the CPU is allocated to VM1 in a state where VM1, VM2, and VM3 are operating, the VM1 is in an execution state and the VM2 and VM3 are in an execution standby state where they are operating but unable to execute a process.

Thus, when an interrupt request to a VM in an execution standby state occurs, it is not possible to execute an interrupt process until the VM transitions to an execution state. As above, depending on the state of a VM serving as a destination of an interrupt request, it takes time until the interrupt process is completed. Thus, the interrupt process would not be executed efficiently.

Accordingly, it is an object in one aspect of an embodiment of the invention to provide an information processing apparatus, an interrupt control method, and an interrupt control program capable of executing an interrupt process efficiently.

### SUMMARY

According to an aspect of an embodiment of the invention, an information processing apparatus includes an interrupt control unit that specifies a virtual machine serving as a destination of an interrupt request, and a virtualization control unit that operates multiple virtual machines. The virtualization control unit includes a specifying unit that specifies a storage destination of an interrupt program corresponding to the virtual machine specified by the interrupt control unit based on information stored in a storage unit which stores information on a storage destination of an interrupt program in association with each of the multiple virtual machines, and an execution control unit that reads and executes the interrupt program stored in the storage destination specified by the specifying unit.

### BRIEF DESCRIPTION OF DRAWINGS

FIG. 1 is an exemplary diagram illustrating an information processing apparatus according to a first embodiment;
FIG. 2 is an exemplary diagram illustrating an example in which the information processing apparatus according to the first embodiment executes an interrupt process;
FIG. 3 is an exemplary diagram illustrating an example in which waiting of an interrupt process occurs;
FIG. 4 is an exemplary diagram illustrating an example in which an interrupt process is executed efficiently;
FIG. 5 is an exemplary functional block diagram illustrating the configuration of an information processing apparatus according to a second embodiment;
FIG. 6 is an exemplary diagram illustrating an example of information stored in a guest ID management table;
FIG. 7 is an exemplary diagram illustrating an example of information stored in an interrupt handler management table;
FIG. 8 is an exemplary diagram illustrating the processing sequence of the information processing apparatus according to the second embodiment by way of an NIC device;
FIG. 9 is an exemplary diagram illustrating the processing sequence of the information processing apparatus according to the second embodiment by way of an HDD device;
FIG. 10 is an exemplary diagram illustrating the processing sequence when a CPU is allocated to a guest serving as a destination of an interrupt request;
FIG. 11 is an exemplary diagram illustrating an example of a guest ID management table storing a protect mode;
FIG. 12 is an exemplary diagram illustrating changing of an execution method in accordance with the type of interrupts; and
FIG. 13 is an exemplary diagram illustrating an example of a hardware configuration of a computer executing an interrupt control program.

### DESCRIPTION OF EMBODIMENTS

Preferred embodiments of the present invention will be explained with reference to accompanying drawings. It is noted that the invention is not limited to these embodiments.

### [a] First embodiment

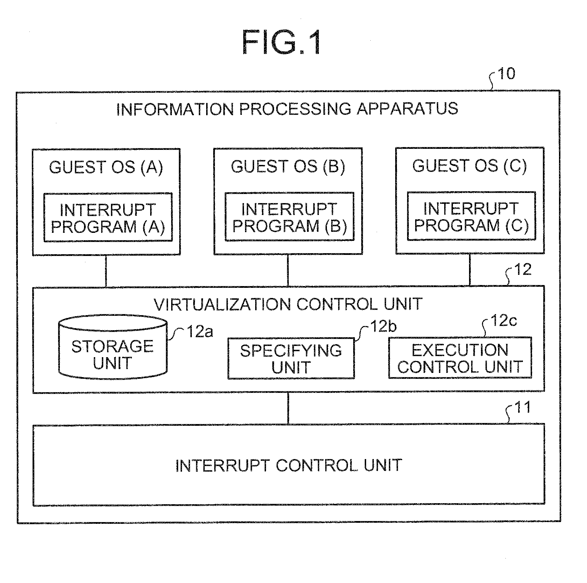

FIG. 1 is an exemplary diagram illustrating an information processing apparatus according to a first embodiment. An information processing apparatus 10 illustrated in FIG. 1 is a server employing server virtualization techniques and operates multiple VMs (virtual machines). In this example, although an example in which the information processing apparatus 10 is a server is described, the information processing apparatus 10 is not limited to this, and may be other apparatuses such as a personal computer. Moreover, the number of VMs is not limited to a number described herein.

As illustrated in FIG. 1, the information processing apparatus 10 includes an interrupt control unit 11 and a virtualization control unit 12. Moreover, the information processing apparatus 10 operates a guest operating system (A) (hereinafter referred to as a guest OS (A)) and a guest OS (B) and a guest OS (C) as virtual machines. The guest OS (A) holds an interrupt program (A), the guest OS (B) holds an interrupt program (B), and the guest OS (C) holds an interrupt program (C).

The interrupt control unit 11 is a processing unit that specifies a virtual machine serving as a destination of an interrupt request when the interrupt request occurs. The virtualization control unit 12 includes a storage unit 12a, a specifying unit 12b, and an execution control unit 12c and is a processing unit that processes an interrupt notified from the interrupt control unit 11 using these units. The storage unit 12a may be included in another processing unit or the like in the information processing apparatus 10 rather than in the virtualization control unit 12.

The storage unit 12a stores information on a storage destination, in which an interrupt program is stored, in association with each of multiple virtual machines. The specifying unit 12b specifies a storage destination of an interrupt program correlated with the virtual machine specified by the interrupt control unit 11 from the storage unit 12a. The execution control unit 12c reads and executes the interrupt program from the storage destination specified by the specifying unit 12b.

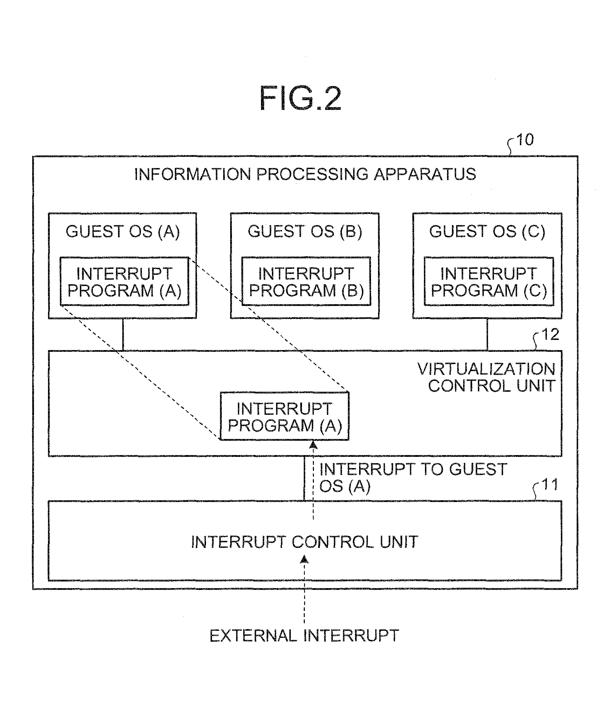

As above, the interrupt control unit 11 of the information processing apparatus 10 specifies a guest OS serving as a destination of an external interrupt when the external interrupt or the like is detected. The virtualization control unit 12 reads an interrupt program of the guest OS serving as a destination of the external interrupt and executes the interrupt program as a proxy for the guest OS. Here, a specific example will be described using FIG. 2. FIG. 2 is an exemplary diagram illustrating an example in which the information processing apparatus according to the first embodiment executes an interrupt process.

As illustrated in FIG. 2, when an external interrupt is detected, the interrupt control unit 11 specifies a guest OS (A) serving as a destination of the external interrupt. The specifying unit 12b of the virtualization control unit 12 specifies address information in which the interrupt program of the guest OS (A) is stored, from the storage unit 12a. The execution control unit 12c reads an interrupt program (A) of the guest OS (A) from the specified address information and executes the interrupt program (A) in the virtualization control unit 12.

That is, the virtualization control unit 12 executes the interrupt program as a proxy for the guest OS which is the destination of the external interrupt. Thus, the information processing apparatus 10 can efficiently execute the interrupt process without delaying the interrupt process until a CPU is allocated to the guest OS.

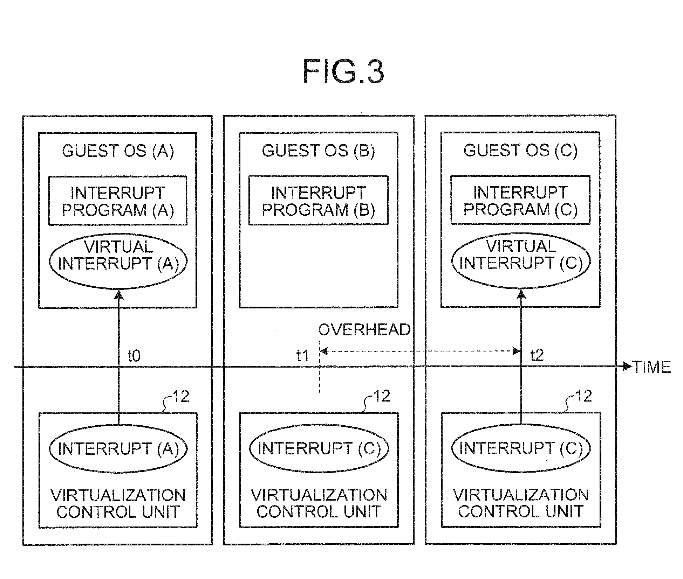

For example, FIG. 3 is an exemplary diagram illustrating an example in which waiting of an interrupt process occurs. FIG. 3 illustrates a case in which the CPU is sequentially allocated to the guest OS (A), the guest OS (B), and the guest OS (C) with an elapse of time. In this case, when an interrupt (A) to the guest OS (A) occurs at time t0, the virtualization control unit 12 converts the interrupt (A) into a virtual interrupt (A) and notifies the guest OS (A) of the virtual interrupt (A) because the CPU is allocated to the guest OS (A) at time t0.

When an interrupt (C) to the guest OS (C) occurs at time t1, the virtualization control unit 12 delays the interrupt (C) since the CPU is allocated to the guest OS (B) at time t1. After time t2 at which the CPU is allocated to the guest OS (C), the virtualization control unit 12 converts the interrupt (C) into a virtual interrupt (C) and notifies the guest OS (C) of the virtual interrupt (C) so as to execute the interrupt (C). That is, the interrupt (C) is delayed for a period from time t1 to time t2. As above, when interrupts are executed by respective guest OS's, the interrupts may be delayed depending on the CPU's allocation state.

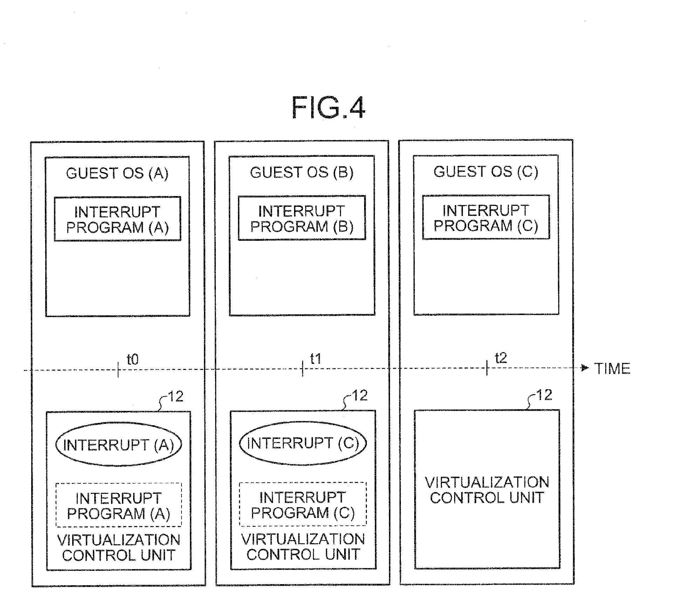

On the other hand, FIG. 4 is an exemplary diagram illustrating an example in which an interrupt process is executed efficiently. FIG. 4 is an exemplary diagram illustrating an interrupt process executed by the information processing apparatus 10 as illustrated in FIG. 1, and the CPU allocation state is as illustrated in FIG. 3. Here, as illustrated in FIG. 4, it is assumed that an interrupt (A) to the guest OS (A) occurs at time t0. In this case, although the CPU is allocated to the guest OS (A), the virtualization control unit 12 reads and executes the interrupt program (A) of the guest OS (A) to thereby process the interrupt (A) without converting the interrupt (A) into a virtual interrupt.

Moreover, when an interrupt (C) to the guest OS (C) occurs at time t1, although the CPU is allocated to the guest OS (B) at time t1, the virtualization control unit 12 reads and executes the interrupt program (C) of the guest OS (C) to thereby process the interrupt (C). As above, as understood from comparison with FIG. 3, occurred interrupts can be executed sequentially without delaying the same, and hence, the information processing apparatus 10 can execute an interrupt process efficiently.

### [b] Second embodiment

Next, an information processing apparatus according to a second embodiment will be described. In the second embodiment, the configuration of the information processing apparatus according to the second embodiment, the flow of processing, and the like will be described.

### Configuration of information processing apparatus

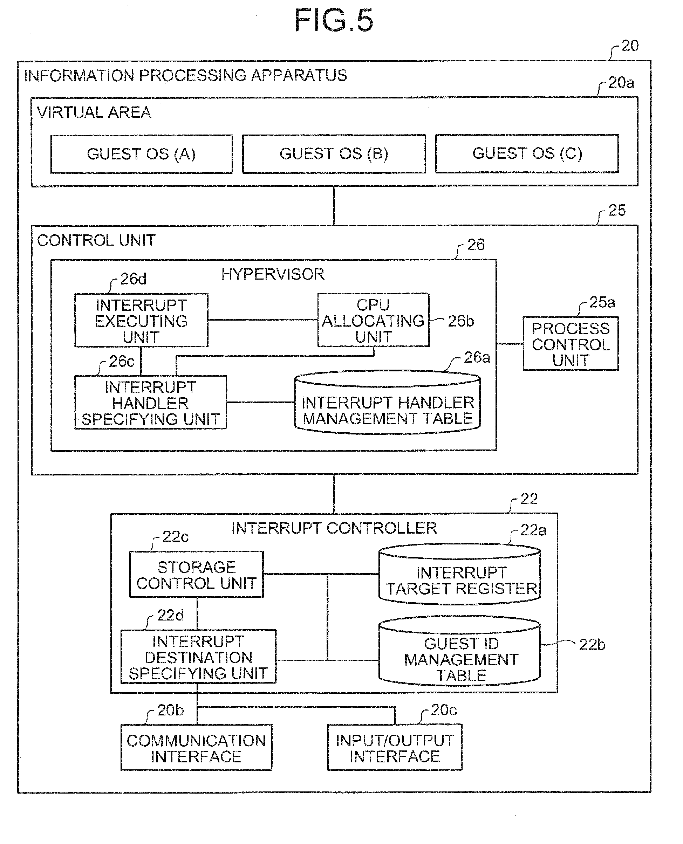

FIG. 5 is an exemplary functional block diagram illustrating the configuration of the information processing apparatus according to the second embodiment. As illustrated in FIG. 5, an information processing apparatus 20 includes a virtual area 20a, a communication interface 20b, an input/output interface 20c, an interrupt controller 22, and a control unit 25. The processing units illustrated herein are only exemplary and are not limited to these. For example, the information processing apparatus may include a storage device such as a memory or a hard disk, a display unit such as a display, an input unit such as a mouse, and the like.

The virtual area 20a is an area managed by a hypervisor 26 of the control unit 25 and can operate an optional number of VMs. In FIG. 5, a guest OS (A), a guest OS (B), and a guest OS (C) operate as VMs. In this example, a guest ID of 0 is allocated to the guest OS (A) as an identifier for identifying the guest OS (A), and a guest ID of 1 is allocated to the guest OS (B) as an identifier for identifying the guest OS (B). Moreover, a guest ID of 2 is allocated to the guest OS (C) as an identifier for identifying the guest OS (C). Moreover, the respective guest OS's hold an interrupt handler executing an interrupt process in accordance with an interrupt factor.

A virtual processor and a virtual memory are allocated to the respective guest OS's operating in the virtual area 20a by the hypervisor 26. The respective guest OS's operate as VMs with the help of the virtual processor and the virtual memory and execute various processes. The virtual memory is a virtual memory implemented by allocating a predetermined area of a memory of the information processing apparatus 20 as a memory used by a guest OS. The virtual processor is a virtual processor implemented by allocating a predetermined processing capability of a process of the information processing apparatus 20 as a processor used by a guest OS.

The communication interface 20b is an interface such as an NIC (network interface card) device, for example, and controls communication between the information processing apparatus 20 and other apparatuses. For example, the communication interface 20b receives data such as packets or frames from other apparatuses and transmits data processed in the information processing apparatus 20 to other apparatuses.

The input/output interface 20c controls communication with a display, a mouse, a keyboard, an HDD (hard disk drive) device, and the like. For example, the input/output interface 20c receives an input to the information processing apparatus 20 through a mouse or a keyboard. Moreover, the input/output interface 20c displays and outputs the results of the processing of the information processing apparatus 20 or the like on a display. Furthermore, the input/output interface 20c executes a write request transmitted from a guest OS with respect to a storage device such as an HDD device and outputs data read from the HDD device to a guest OS.

The interrupt controller 22 includes an interrupt target register 22a, a guest ID management table 22b, a storage control unit 22c, and an interrupt destination specifying unit 22d and is a processing unit that executes processes relevant to an interrupt using these units.

The interrupt target register 22a stores a guest ID of a guest OS serving as a destination of an interrupt. The guest ID is an identifier for identifying a guest OS operating in a virtual area. Moreover, information stored in the interrupt target register 22a is updated by the interrupt destination specifying unit 22d. Moreover, when an interrupt process is completed, the interrupt controller 22 or the hypervisor 26 may delete a guest ID of a guest OS that executed the interrupt process.

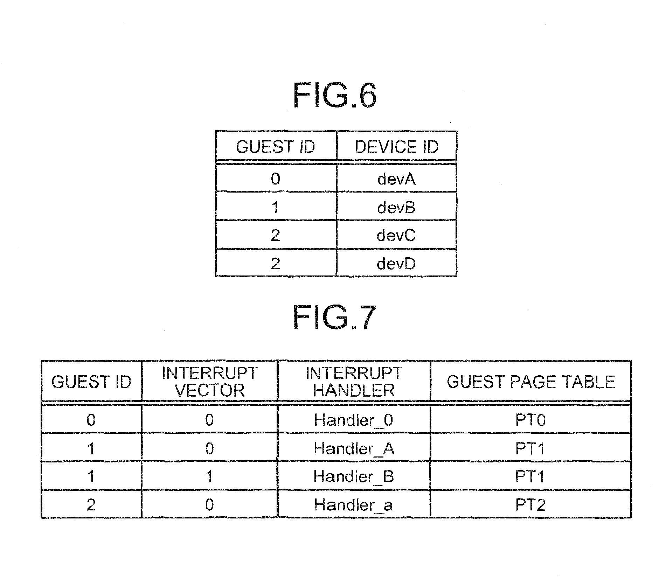

The guest ID management table 22b is a storage unit that stores information of devices used by each of the guest OS's. Moreover, the information stored in the guest ID management table 22b may be stored by an administrator or the like and may be stored by the storage control unit 22c. FIG. 6 is an exemplary diagram illustrating an example of information stored in the guest ID management table 22b. As illustrated in FIG. 6, the guest ID management table 22b stores "guest ID" and "device ID" in correlation. The "guest ID" stored therein is an identifier for identifying respective guest OS's operating in the virtual area 20a, and the "device ID" stored therein is an identifier for identifying a device used by a guest OS and is an identifier for identifying an HDD, an NIC, or the like, for example.

In the case of FIG. 6, the guest OS (A) to which a guest ID of 0 is allocated uses a device having a device ID of devA. Similarly, the guest OS (B) to which a guest ID of 1 is allocated uses a device having a device ID of devB. Moreover, the guest OS (C) to which a guest ID of 2 is allocated uses a device having a device ID of devC and a device having a device ID of devD.

Various types of information can be used as the device ID. For example, when the device is an NIC device, an MAC address of the NIC device such as "AA:AA:AA:AA:AA:AA" may be stored in the guest ID management table 22b. Moreover, when the device is an HDD device, a UUID (universally unique identifier) or a device name of the HDD device such as "109097hi-fujitsu..." may be stored in the guest ID management table 22b.

When the guest OS operates in the virtual area 20a, the storage control unit 22c is a processing unit that stores a guest ID for identifying the operating guest OS and a device ID of a device used by the guest OS in the guest ID management table 22b in correlation. For example, when a guest OS (D) which is a new virtual machine is operated, the storage control unit 22c receives a guest ID allocated to the guest OS (D) and a device ID of an NIC device used by the guest OS (D) from an operator or the like. Moreover, the storage control unit 22c stores the received guest ID and device ID in the guest ID management table 22b in correlation.

Moreover, when an access request to an HDD device is transmitted from the newly operated guest OS (D), the storage control unit 22c extracts a guest ID and a device ID from the access request. Moreover, the storage control unit 22c stores the extracted guest ID and device ID in the guest ID management table 22b in correlation.

The interrupt destination specifying unit 22d is a processing unit that specifies a virtual machine serving as a destination of an interrupt request. For example, when a packet arrives at the communication interface 20b, the interrupt destination specifying unit 22d detects that an external interrupt requesting reception of packets has occurred. Then, the interrupt destination specifying unit 22d specifies an NIC device at which the packet has arrived. Moreover, the interrupt destination specifying unit 22d specifies a guest ID corresponding to the device ID of the NIC device from the guest ID management table 22b. Subsequently, the interrupt destination specifying unit 22d stores the specified guest ID in the interrupt target register 22a and notifies the hypervisor 26 of an external interrupt request for reception of packets.

Moreover, when a response to a DMA (direct memory access) transfer transmitted from a guest OS arrives at the input/output interface 20c, the interrupt destination specifying unit 22d detects that an external interrupt notifying completion of the DMA has occurred. Then, the interrupt destination specifying unit 22d specifies a HDD device serving as a transmission source from a notification of completion of the DMA. Moreover, the interrupt destination specifying unit 22d specifies a guest ID corresponding to the device ID allocated to the HDD device from the guest ID management table 22b. Subsequently, the interrupt destination specifying unit 22d stores the specified guest ID in the interrupt target register 22a and notifies the hypervisor 26 of an external interrupt request for a notification of completion of the DMA.

The control unit 25 includes a process control unit 25a and the hypervisor 26 and a processing unit that controls an interrupt process using these units. For example, the control unit 25 is an electronic circuit such as a CPU. The control unit 25 may include an internal memory or the like.

The process control unit 25a is a processing unit that executes processes other than the processes relevant to the guest OS. For example, the process control unit 25a executes stopping activation of an OS mounted in the information processing apparatus 20 and stopping activation of the hypervisor 26.

The hypervisor 26 includes an interrupt handler management table 26a, a CPU allocating unit 26b, an interrupt handler specifying unit 26c, and an interrupt executing unit 26d, and is a processing unit that processes an interrupt request notified from the interrupt controller 22 using these units. Moreover, the hypervisor 26 transmits packets transmitted from respective guest OS's to a destination and outputs device access requests output from respective guest OS's to the corresponding devices.

The interrupt handler management table 26a is a storage unit that stores information on a storage destination, in which an interrupt handler is stored, in association with each of multiple guest OS's. FIG. 7 is an exemplary diagram illustrating an example of information stored in an interrupt handler management table. As illustrated in FIG. 7, the interrupt handler management table 26a stores "guest ID", "interrupt vector", "interrupt handler", and "guest page table" in correlation.

The "guest ID" stored in the interrupt handler management table 26a is an identifier for identifying guest OS's operate in the virtual area 20a, and the "interrupt vector" is an identifier for identifying the factors of interrupts. The "interrupt handler" is stored in a format of the physical address used by a guest OS, that is, in a format of the address of a virtual address space provided by the hypervisor 26, and represents a header address of a storage destination in which an interrupt handler is stored. The "guest page table" is a page table used for converting into a virtual space of a guest OS, and represents a header address of a physical address space held by the guest OS, that is, a header address of a virtual address space provided by the hypervisor 26.

FIG. 7 illustrates a case in which when an external interrupt of which the interrupt vector is 0 occurs with respect to the guest OS (A) to which a guest ID of 0 is allocated, a physical address "Handler_0" of the guest OS (A) is converted into a virtual address using a guest page table PTO. As a result, the interrupt executing unit 26d of the hypervisor 26 can execute an interrupt handler in an address space managed by the guest OS. Similarly, FIG. 7 also illustrates a case in which when an external interrupt of the interrupt vector of 1 occurs with respect to the guest OS (B) to which a guest ID of 1 is allocated, a physical address "Handler_B" of the guest OS (B) is converted into a virtual address using a guest page table PT1.

Moreover, the interrupt handler management table 26a can also store the header address of a TLB (translation look-aside buffer) held by a guest OS in correlation. By doing so, the hypervisor 26 can specify the storage destination of an interrupt handler from a virtual address space of the guest OS at a higher speed.

The CPU allocating unit 26b is a processing unit that allocates the CPU to respective guest OS's in accordance with a predetermined scheduler. For example, the CPU allocating unit 26b transfers the execution right of CPU from the guest OS (A) to the guest OS (B) in accordance with a schedule determined by an operator, a hypervisor, or the like. As a result, the guest OS (A) transitions to an execution standby state of not having the execution right, and the guest OS (B) transitions to an execution state of having the execution right.

The interrupt handler specifying unit 26c is a processing unit that specifies a storage destination of an interrupt handler corresponding to the guest OS specified by the interrupt controller 22 from the interrupt handler management table 26a. For example, the interrupt handler specifying unit 26c receives an external interrupt request for reception of packets from the interrupt controller 22. Subsequently, the interrupt handler specifying unit 26c acquires a guest ID stored in the interrupt target register 22a of the interrupt controller 22. That is, the interrupt handler specifying unit 26c acquires a destination of the external interrupt request for reception of packets. In this case, the interrupt handler specifying unit 26c specifies a guest OS corresponding to the acquired guest ID. The correlation between the guest ID and the guest OS is stored in an internal memory of the control unit 25 or a storage device (not illustrated) such as a memory.

Moreover, the interrupt handler specifying unit 26c acquires a CPU allocation state of the CPU allocating unit 26b and determines whether the CPU is allocated to a guest OS serving as a destination of an external interrupt request for reception of packets. When the CPU is allocated, the interrupt handler specifying unit 26c converts the external interrupt request into a virtual interrupt and outputs the converted virtual interrupt to a guest OS serving as the destination of the interrupt request.

On the other hand, when the CPU is not allocated, the interrupt handler specifying unit 26c specifies an interrupt vector corresponding to the external interrupt. For example, the interrupt handler specifying unit 26c may specify the interrupt vector from the interrupt request and may hold a table storing the type of an interrupt request and the interrupt vector in correlation and specify the interrupt vector based on the table. Moreover, the interrupt handler specifying unit 26c reads an interrupt handler and a guest page table corresponding to a combination of the guest ID acquired from the interrupt controller 22 and the specified interrupt vector from the interrupt handler management table 26a. After that, the interrupt handler specifying unit 26c outputs the read interrupt handler and guest page table to the interrupt executing unit 26d.

As an example, it is assumed that the interrupt handler specifying unit 26c has been notified of the external interrupt of which the interrupt vector is 0 from the interrupt controller 22 and has acquired a guest ID of 0 from the interrupt target register 22a. Moreover, when it is determined that the CPU is allocated to the guest OS (A) having a guest ID of 0, the interrupt handler specifying unit 26c converts the notified external interrupt into a virtual interrupt and outputs the virtual interrupt to the guest OS (A). As a result, the guest OS (A) executes an interrupt process.

On the other hand, when it is determined that the CPU is not allocated to the guest OS (A) having a guest ID of 0, the interrupt handler specifying unit 26c acquires "Handler 0" and "PT0" corresponding to a combination of the guest ID of 0 and the interrupt vector of 0 from the interrupt handler management table 26a. Moreover, the interrupt handler specifying unit 26c outputs the physical address "Handler_0" of the interrupt handler and the page table "PT0" to the interrupt executing unit 26d.

The interrupt executing unit 26d is a processing unit that reads and executes an interrupt handler from the storage destination specified by the interrupt handler specifying unit 26c. For example, the interrupt executing unit 26d acquires a physical address "Handler_0" and a page table "PT0" from the interrupt handler specifying unit 26c. Moreover, the interrupt executing unit 26d converts a physical address "Handler_0" of a physical address space managed by the guest OS (A) into a virtual address of a virtual address space managed by the guest OS (A) using the page table "PT0". After that, the interrupt executing unit 26d reads and executes the interrupt handler from the converted virtual address. Moreover, when execution of the interrupt handler is completed, the interrupt executing unit 26d transmits "EOI (End of Interrupt)" which is a completion notification to the interrupt controller 22 or an interrupt controller which has issued an interrupt.

### Process flow

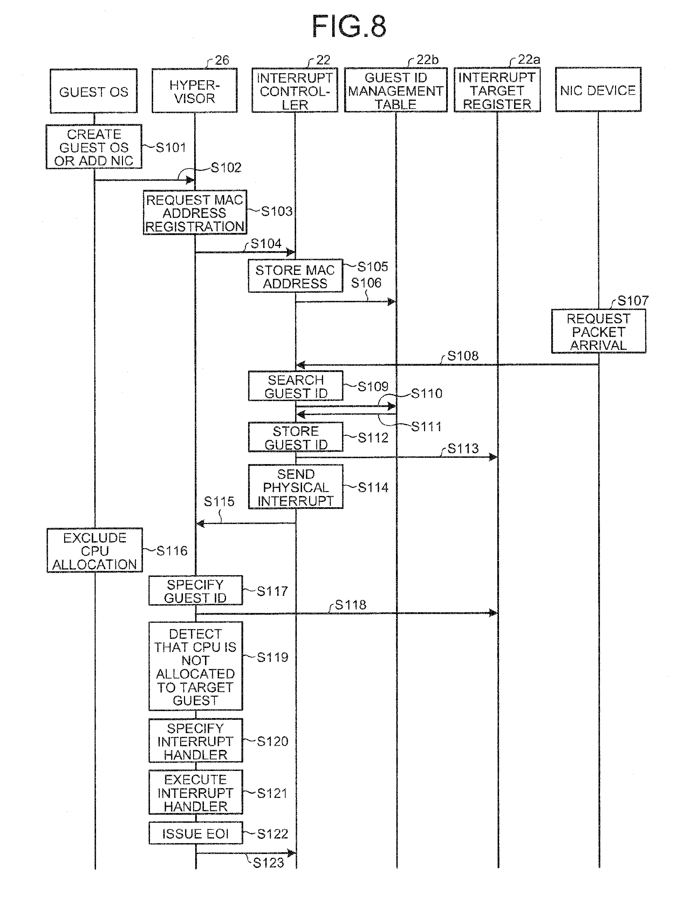

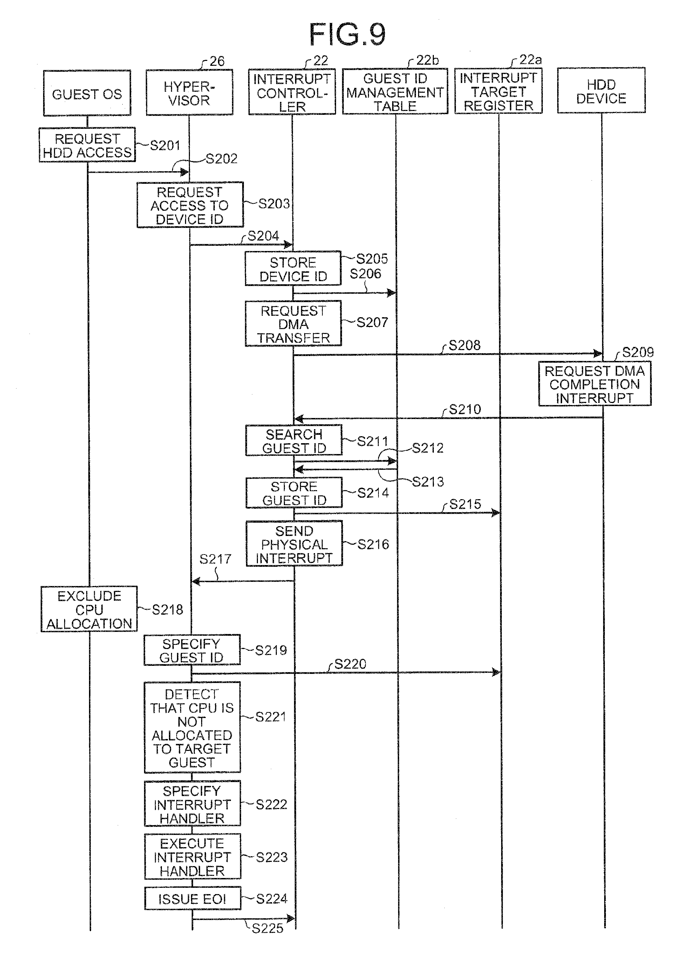

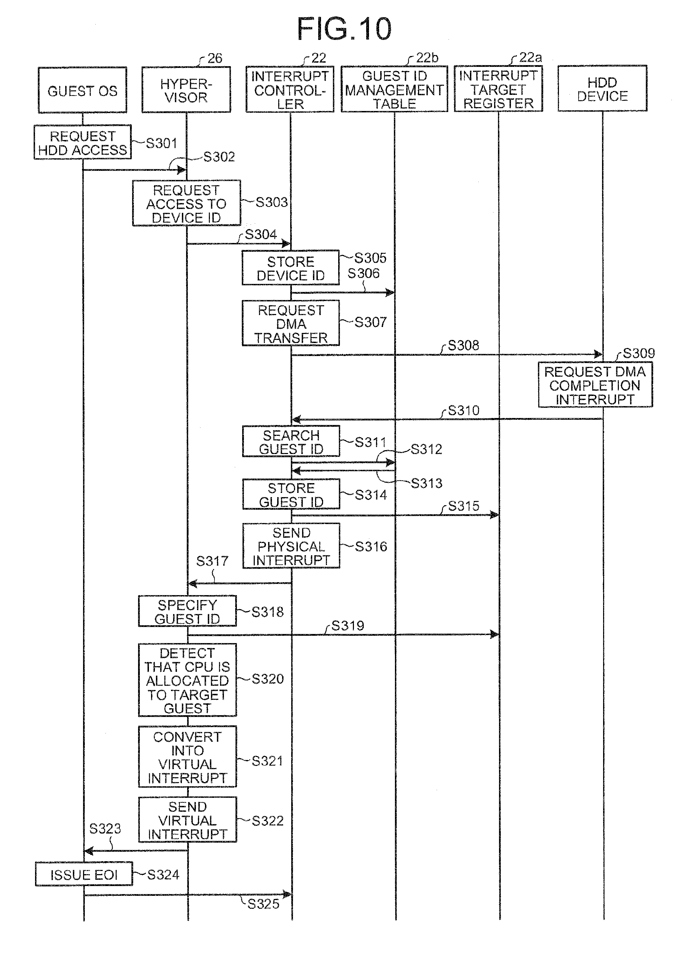

Next, the flow of processes executed by the information processing apparatus 20 will be described using FIGS. 8 to 10. In this example, an example in which the request source of an interrupt request is an NIC device will be described using FIG. 8, an example in which the request source of an interrupt request is an HDD device will be described using FIG. 9, and an example in which the CPU is allocated to a destination of an interrupt request will be described using FIG. 10.

### Example where NIC device is used

FIG. 8 is an exemplary diagram illustrating the processing sequence of the information processing apparatus according to the second embodiment by way of an NIC device. As illustrated in FIG. 8, when a guest OS is created in the virtual area 20a by an operator or the like, or an NIC device used by the guest OS is added (S101 and S102), the hypervisor 26 executes S103.

That is, the hypervisor 26 outputs a request to register an MAC address of an NIC device that is used by the guest OS or added to the interrupt controller 22 (S103 and S104). In this case, the hypervisor 26 also outputs a guest ID of the guest OS to the interrupt controller 22. The guest ID may be designated by the operator and may be uniquely assigned by the hypervisor.

Moreover, the storage control unit 22c of the interrupt controller 22 stores the MAC address of the NIC device and the guest ID notified from the hypervisor 26 in the guest ID management table 22b in correlation (S105 and S106) .

After that, when packets arrive at an NIC device included in the communication interface 20b, the communication interface 20b outputs a packet arrival request to the interrupt controller 22 (S107 and S108). That is, the communication interface 20b notifies the interrupt controller 22 of an external interrupt.

Moreover, the interrupt destination specifying unit 22d of the interrupt controller 22 specifies a guest ID corresponding to the MAC address of the NIC device at which packets have arrived from the guest ID management table 22b (S109 to S111). The interrupt destination specifying unit 22d may extract the MAC address of a destination stored in the header of the packets or the like and may extract the MAC address directly from the NIC device at which packets have arrived. For example, when a physical NIC device is shared by multiple guest OS's, the device ID may be extracted from the MAC address of the destination. Subsequently, the interrupt destination specifying unit 22d stores the specified guest ID in the interrupt target register 22a (S112 and S113). After that, the interrupt destination specifying unit 22d sends a packet arrival request, that is, a physical interrupt request to the hypervisor 26 (S114 and S115).

On the other hand, in this case, the guest OS having the guest ID specified by the interrupt destination specifying unit 22d is excluded from CPU allocation (S116). That is, a destination guest OS of an interrupt request transitions from a state of having the execution right of CPU to a state of not having the execution right.

After that, upon receiving a physical interrupt request from the interrupt controller 22, the interrupt handler specifying unit 26c of the hypervisor 26 specifies a guest ID serving as a destination of an interrupt by referring to the interrupt target register 22a (S117 and S118).

Subsequently, the interrupt handler specifying unit 26c checks an allocation state of the CPU allocating unit 26b and detects that the CPU is not allocated to the guest OS having the specified guest ID (S119).

Then, the interrupt handler specifying unit 26c extracts an interrupt vector from a packet arrival request sent from the interrupt controller 22 and executes S120. That is, the interrupt handler specifying unit 26c specifies a header address of an interrupt handler and a page table in accordance with a combination of the interrupt vector and the guest ID.

After that, the interrupt executing unit 26d reads and executes the interrupt handler from the guest OS using the header address of the interrupt handler and the page table specified by the interrupt handler specifying unit 26c (S121). When execution of the interrupt handler is finished, that is, when the external interrupt based on the packet arrival request is completed, the interrupt executing unit 26d transmits the EOI to the interrupt controller (S122 and S123).

### Example where HDD device is used

FIG. 9 is an exemplary diagram illustrating the processing sequence of the information processing apparatus according to the second embodiment by way of an HDD device. As illustrated in FIG. 9, the guest OS transmits an access request to the HDD device to the hypervisor 26 (S201 and S202). Upon receiving the access request, the hypervisor 26 assigns a device ID to an HDD device serving as an access request destination and outputs the access request to the device ID to the interrupt controller together with the assigned device ID (S203 and S204).

Moreover, the storage control unit 22c of the interrupt controller 22 specifies a guest ID of a guest OS serving as a request source from the access request and the like and executes S205. That is, the storage control unit 22c stores the specified guest ID and the device ID received along with the access request in the guest ID management table 22b in correlation (S205 and S206).

After that, the interrupt controller 22 transmits a DMA transfer request to the HDD (S207 and S208). When the DMA transfer to the HDD is completed, the HDD device transmits a DMA completion interrupt request to the interrupt controller 22 (S209 and S210). That is, the input/output interface 20c notifies the interrupt controller 22 of the external interrupt.

The processes of S211 to S223 executed thereafter are the same as those of S109 to S121 described in FIG. 8, and detailed description will not be provided. When execution of the interrupt handler is completed, that is, when the external interrupt based on the DMA completion interrupt request is completed, the interrupt executing unit 26d transmits the EOI to the interrupt controller 22 (S224 and S225) .

### Interrupt process to guest OS having execution right

FIG. 10 is an exemplary diagram illustrating the processing sequence when a CPU is allocated to a guest serving as a destination of an interrupt request. The processes of S301 to S310 illustrated in FIG. 10 are the same as those of S201 to S210 described in FIG. 9, and detailed description will not be provided.

Moreover, the interrupt destination specifying unit 22d of the interrupt controller 22 specifies a guest ID corresponding to the device ID of the HDD device having transmitted the DMA transfer request from the guest ID management table 22b (S311 to S313). Subsequently, the interrupt destination specifying unit 22d stores the specified guest ID in the interrupt target register 22a (S314 and S315). After that, the interrupt destination specifying unit 22d sends the DMA transfer request, that is, a physical interrupt request to the hypervisor 26 (S316 and S317).

After that, upon receiving the physical interrupt request from the interrupt controller 22, the interrupt handler specifying unit 26c of the hypervisor 26 specifies a guest ID serving as a destination of the interrupt by referring to the interrupt target register 22a (S318 and S319).

Subsequently, the interrupt handler specifying unit 26c checks an allocation state of the CPU allocating unit 26b and detects that the CPU is allocated to the guest OS having the specified guest ID (S320).

Moreover, the interrupt handler specifying unit 26c converts the DMA transfer request into a virtual interrupt request (S321) and sends the converted virtual interrupt request to a guest OS having the specified guest ID (S322 and S323). After that, the guest OS having received the virtual interrupt request executes an interrupt process and transmits the EOI to the interrupt controller when the interrupt process is completed (S324 and S325).

As above, in the information processing apparatus 20 according to the second embodiment, when multiple guest OS's are operating, the hypervisor 26 can determine which guest OS the interrupt process is directed to and perform a proxy process on the interrupt handler of the guest OS. Moreover, since the information processing apparatus 20 can finish the interrupt process without waiting until the CPU is allocated to the guest OS, the information processing apparatus 20 can process immediately a subsequent interrupt without delay. Moreover, since the information processing apparatus 20 directly invokes the interrupt handler of the guest OS without through the virtual interrupt, it is possible to efficiently execute an interrupt process to the guest OS. Moreover, by issuing an EOI by the interrupt handler, it is possible to process a subsequent interrupt without delay.

### [c] Third embodiment

While the embodiments of the present invention have been described hereinabove, the present invention may be implemented in various other forms other than the above-described embodiments. The other embodiments will be described below.

### Protect mode

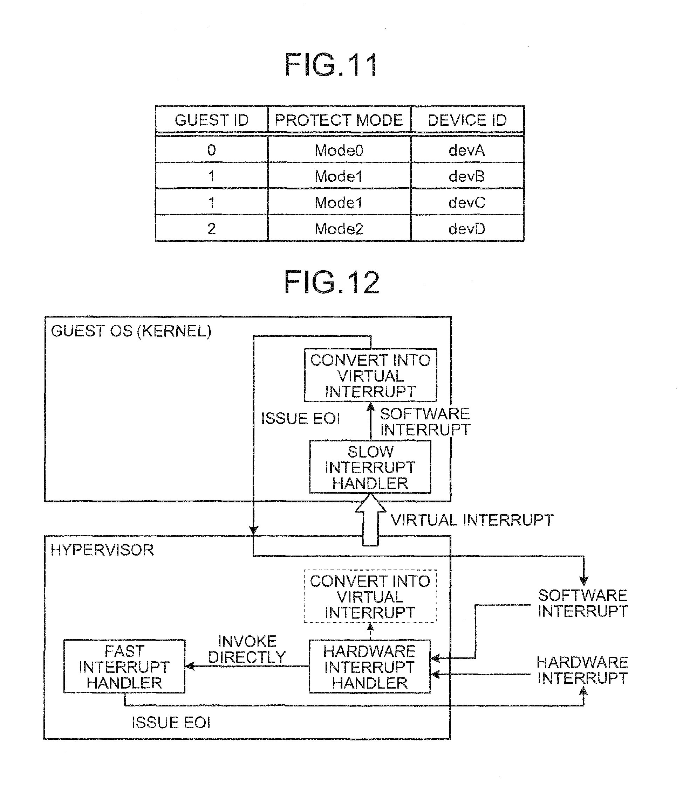

The information processing apparatus disclosed herein may further store address information, in which an operation mode of a virtual machine, for example, is stored, as information stored in the guest ID management table described in the second embodiment. FIG. 11 is an exemplary diagram illustrating an example of a guest ID management table storing a protect mode. As illustrated in FIG. 11, the guest ID management table stores "protect mode" in addition to "guest ID and device ID" described in the second embodiment and the like. The "protect mode" stored herein is information representing a storage destination of an operation mode of a guest OS and is the header address of a virtual address space managed by the guest OS, for example. The operation mode read from an address indicated by the protect mode is called a protected virtual address mode, for example. The protect mode is stored by the interrupt controller 22 receiving the same from an operator or the like. As an example, the interrupt controller 22 stores information which the hypervisor 26 receives from an operator at the timing of S102 of FIG. 8 in the guest ID management table.

When the guest ID serving as the destination of an interrupt is specified, the interrupt destination specifying unit 22d of the interrupt controller 22 also specifies the protect mode and registers the same in the interrupt target register 22a and notifies the hypervisor 26 of the same. Moreover, when executing the interrupt handler, the interrupt executing unit 26d of the hypervisor 26 reads the protect mode from the storage destination and executes the interrupt handler in the operation mode of respective guest OS's. Thus, since the information processing apparatus 20 can execute the interrupt handler in the operation mode of the respective guest OS's, it is possible to prevent destruction of a memory space or the like of other guest OS's.

### Interrupt type

The information processing apparatus disclosed herein may determine whether the hypervisor 26 performs an interrupt process as a proxy depending on the type of interrupts. For example, information on the storage destination of an interrupt handler executed with respect to a hardware interrupt is stored in the interrupt handler management table 26a of the hypervisor 26 in association with each of the guest OS's. By doing so, a hardware interrupt can be executed preferentially to a software interrupt.

The hardware interrupt is an interrupt process such as an Ethernet (registered trademark) driver process, a SCSI (small computer system interface) host adapter driver process, or a serial driver process. The hardware interrupt is an interrupt process which requires execution of an interrupt to be completed as fast as possible when the interrupt occurs so that the execution time decreases. Moreover, the software interrupt is an interrupt process such as a TCP (transmission control protocol)/IP (internet protocol) protocol process, a SCSI protocol process, or a terminal control process. The software interrupt is an interrupt process which does not require fast completion of execution as compared to the hardware interrupt.

The hypervisor of the information processing apparatus disclosed herein example performs execution in the context of a hardware interrupt handler, and only registration of a software interrupt is executed in the hardware interrupt handler, and the software interrupts are collectively executed later. FIG. 12 is an exemplary diagram illustrating changing of an execution method in accordance with the type of interrupts.

As illustrated in FIG. 12, the hypervisor holds a hardware interrupt handler executing a hardware interrupt, and the hardware interrupt handler holds an interrupt handler of each hardware interrupt as a fast interrupt handler. When a hardware interrupt occurs, the hypervisor activates a hardware interrupt handler to invoke the fast interrupt handler and executes an interrupt process as a proxy for the guest OS. After that, when execution is completed, the fast interrupt handler issues the EOI to an interrupt controller.

Moreover, when a software interrupt occurs, the hypervisor activates a hardware interrupt handler to convert the software interrupt into a virtual interrupt and notifies the kernel of the guest OS of the virtual interrupt. Upon receiving a virtual interrupt, the guest OS executes a slow interrupt handler. The slow interrupt handler is an interrupt handler that executes a software interrupt, for example. After that, when the guest OS acquires the execution right of a processor in accordance with a scheduler or the like, the slow interrupt handler of the guest OS executes a software interrupt handler to execute an interrupt process. When the process is completed, the software interrupt handler issues the EOI to the interrupt controller.

In the above example, although an example in which a hardware interrupt and a software interrupt occur as individual interrupts has been described, a hardware interrupt may be first executed with respect to a single external interrupt to issue the EOI, and then, the external interrupt may be collectively executed as a software interrupt. For example, when packets arrive at an NIC device, the interrupt controller generates an interrupt request and activates a hardware interrupt handler of the hypervisor. Since the external interrupt corresponds to a slow interrupt, the hardware interrupt handler of the hypervisor converts the external interrupt into a virtual interrupt and notifies the slow interrupt handler held by the kernel of the guest OS of the virtual interrupt. On the other hand, the hardware interrupt handler of the hypervisor invokes a fast interrupt handler of a registered guest and issues the EOI when the process of the fast interrupt handler is finished. After that, when the guest OS acquires the execution right of a processor in accordance with a scheduler or the like, the slow interrupt handler of the guest OS executes the software interrupt handler to execute an interrupt process.

### Executing method

In the second embodiment, an example in which the interrupt handler is read and executed when the execution right of a processor is not allocated to the guest OS, and the external interrupt is converted into a virtual interrupt request, and the virtual interrupt request is output to the guest OS when the execution right of a processor is allocated to the guest OS has been described. However, a method of executing interrupts in the information processing apparatus disclosed herein is not limited to this. For example, even when the execution right of a processor is allocated to an interrupt target guest OS, the hypervisor of the information processing apparatus may execute the interrupt handler as a proxy for the guest OS.

### System

Among the processes described in the embodiments, all or part of the processes described to be automatically performed may be manually performed. Alternatively, all or part of the processes described to be manually performed may be automatically performed with publicly known methods. The processing procedures, control procedures, and specific names described in the above document and the drawings, for example, information including various data and parameters, may be arbitrarily modified unless otherwise specified.

The constituent elements of the devices depicted in the drawings are functionally conceptual, and need not necessarily to be physically configured as depicted in the drawings. That is, specific forms of distribution and integration of the devices are not limited to those illustrated in the drawings. For example, all or part of the devices may be functionally or physically distributed or integrated in arbitrary units according to various loads and the state of use. Moreover, all or an arbitrary part of the processing functions performed in each device may be realized by a CPU and a program analyzed and executed by the CPU, or may be realized as hardware by wired logic.

### Program

Various processes described in the embodiments may be achieved by causing a computer system such as a personal computer or a workstation to execute a program prepared in advance. In the following description, an example of a computer system executing a program having the same function as the above-described embodiments will be described.

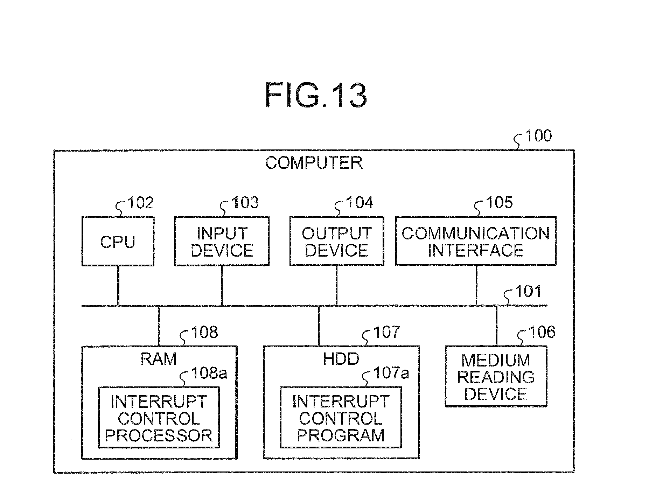

FIG. 13 is an exemplary diagram illustrating an example of a hardware configuration of a computer executing an interrupt control program. As illustrated in FIG. 13, a computer 100 includes a CPU 102, an input device 103, an output device 104, a communication interface 105, a medium reading device 106, an HDD (hard disk drive) 107, and a RAM (random access memory) 108. Moreover, the respective units illustrated in FIG. 13 are connected to each other by a bus 101.

The input device 103 is a mouse and a keyboard, the output device 104 is a display or the like, and the communication interface 105 is an interface such as an NIC. The HDD 107 stores information of the tables illustrated in FIG. 5 together with an interrupt control program 107a. Although the HDD 107 is illustrated as an example of a recording medium, various programs may be stored in another computer readable recording medium such as a ROM (read only memory), a RAM (random access memory), or a CD-ROM and be read into the computer. A storage medium may be disposed in a remote site, and the computer may access the storage medium to acquire and use the program. Moreover, the acquired program may be stored in a recording medium of the computer itself and used.

The CPU 102 reads the interrupt control program 107a and deploys the same into the RAM 108 to thereby operate an interrupt control processor 108a that executes the respective functions described in FIG. 5 and the like. That is, the interrupt control processor 108a executes the same functions as the storage control unit 22c, the interrupt destination specifying unit 22d, the interrupt handler specifying unit 26c, and the interrupt executing unit 26d described in FIG. 5. As above, the computer 100 reads and executes the program and operates as an information processing apparatus executing an interrupt control method.

For example, the computer 100 may implement the same functions as the above-described embodiments by reading the interrupt control program 107a from a recording medium using the medium reading device 106 and executing the read interrupt control program 107a. The program mentioned in the other embodiment is not limited to one which is executed by the computer 100. For example, the present invention can be similarly applied to when another computer or server executes the program and when the computer and the server execute the program in cooperation.

According to the embodiments, it is possible to execute an interrupt process efficiently.

## Claims

1. An information processing apparatus (10) comprising:
an interrupt control unit (11) that specifies a virtual machine serving as a destination of an interrupt request; and
a virtualization control unit (12) that operates multiple virtual machines, the virtualization control unit including
a specifying unit (12b) that specifies a storage destination of an interrupt program corresponding to the virtual machine specified by the interrupt control unit based on information stored in a storage unit (12a) which stores information on a storage destination of an interrupt program in association with each of the multiple virtual machines, and
an execution control unit (12c) that reads and executes the interrupt program stored in the storage destination specified by the specifying unit (12b).

2. The information processing apparatus (20) according to claim 1, wherein
the interrupt control unit (22c) stores, when the virtualization control unit operates a virtual machine, a machine identifier for identifying the virtual machine operated and a device identifier for identifying an external device used by the virtual machine operated in association with each other in an identifier storage unit (22b), and
when an interrupt request occurs, a machine identifier corresponding to a device identifier of a device that issues the interrupt request is specified from the identifier storage unit (22b).

3. The information processing apparatus (20) according to claim 2, wherein
the identifier storage unit (22b) further stores address information on an address in which an operation mode is stored in association with each of the multiple virtual machines,
the specifying unit (22d) further specifies address information corresponding to the virtual machine specified by the interrupt control unit (22c), and
the execution control unit (26d) reads an operation mode based on the address information specified by the specifying unit (22d), and executes the interrupt program in the read operation mode.

4. The information processing apparatus (10; 20) according to any one of claims 1 to 3, wherein
(i) when an execution right of a processor is not allocated to the virtual machine specified by the interrupt control unit (11; 22c), the execution control unit (12c; 26d) reads and executes the interrupt program, and (ii) when the execution right of a processor is allocated to the virtual machine specified by the interrupt control unit (11; 22c), the execution control unit (12c; 26c) converts the interrupt request into a virtual interrupt request and outputs the virtual interrupt request to the virtual machine serving as the destination of the interrupt request.

5. The information processing apparatus (10; 20) according to any one of claims 1 to 3, wherein
the storage unit (12a; 26a) stores information on a storage destination of an interrupt program executed with respect to a hardware interrupt in association with each of the multiple virtual machines, and
(i) the execution control unit (12c; 26d), when the specifying unit (12b; 26c) specifies the storage destination of the interrupt program for a hardware interrupt, reads and executes the interrupt program stored in the storage destination specified, and (ii) the execution control unit (12c; 26d), when the specifying unit (12b; 26c) does not specify the storage destination of an interrupt program for the interrupt request, converts the interrupt request into a virtual interrupt and outputs the virtual interrupt to the virtual machine serving as the destination of the interrupt request.

6. An interrupt control method of causing an information processing apparatus to execute:
specifying a storage destination of an interrupt program corresponding to a virtual machine specified by an interrupt control unit based on information stored in a storage unit which stores information on a storage destination of an interrupt program in association with each of multiple virtual machines, the interrupt control unit specifying a virtual machine serving as a destination of an interrupt request; and
reading and executing the interrupt program stored in the storage destination specified.

7. An interrupt control program causing an information processing apparatus to execute:
specifying a storage destination of an interrupt program corresponding to a virtual machine specified by an interrupt control unit based on information stored in a storage unit which stores information on a storage destination of an interrupt program in association with each of multiple virtual machines, the interrupt control unit specifying a virtual machine serving as a destination of an interrupt request; and
reading and executing the interrupt program stored in the storage destination specified.
